# FASCICULE DE BREVET EUROPEEN

(11) **EP 2 802 491 B1**
(45) Date de publication et mention de la délivrance du brevet: **25.05.2016**
(21) Numéro de dépôt: 12816768.1
(22) Date de dépôt: 21.12.2012
(51) Int. Cl.: B60S 5/06

(54) **DISPOSITIF DE MONTAGE ET DEMONTAGE D'UNE BATTERIE DE VEHICULE**
VORRICHTUNG ZUM INSTALLIEREN UND DEINSTALLIEREN EINER FAHRZEUGBATTERIE
DEVICE FOR INSTALLING AND UNINSTALLING A VEHICLE BATTERY

(30) Priorité: 09.01.2012 FR 1250219
(43) Date de publication de la demande: 19.11.2014
(73) Titulaire: Renault S.A.S., 92100 Boulogne-Billancourt (FR)
(72) Inventeur: MULATO, Gilles, F-92320 Chatillon (FR); JARDEL, Florent, F-93400 Saint-ouen (FR); BACHIR, Alain, F-78640 Saint Germain De La Grange (FR)
(86) Numéro de dépôt international: PCT/FR2012/053046
(87) Numéro de publication internationale: WO 2013/104844

(56) Documents cités:
- WO-A1-2011/138442
- US-A1- 2008 294 283
- US-A1- 2010 145 717

## Description

### Domaine technique de l'invention

L'invention concerne le domaine de l'échange d'une batterie d'alimentation d'un moteur électrique de traction d'un véhicule de type tout électrique ou de type hybride.

L'invention a pour objet plus particulièrement un dispositif de montage et de démontage d'une telle batterie sur un véhicule.

### État de la technique

Certains véhicules automobiles, comme les véhicules électriques ou hybrides, comprennent un conteneur d'énergie d'alimentation d'un moteur électrique d'entraînement de type batterie électrique d'alimentation. Dans la suite de la description, le terme « batterie » sera utilisé pour une raison de simplification, comme désignant au sens large tout conteneur d'alimentation électrique d'un moteur électrique d'entraînement d'un véhicule. Il peut se révéler intéressant d'échanger cette batterie lorsque son niveau d'énergie est faible contre une nouvelle batterie chargée. Ceci peut être fait dans une station d'échange, comme par exemple une station similaire à une station-service pour le remplissage des réservoirs associés aux moteurs thermiques.

On connaît du document US2010/145717 une station d'échange de batteries électriques d'alimentation d'un moteur électrique d'entraînement d'un véhicule électrique et un procédé pour réaliser un tel échange. La station d'échange décrite comprend une table élévatrice portant un élément de verrouillage et de déverrouillage de la batterie sur le véhicule.

Une difficulté pour la mise en place d'un tel concept d'échange de batteries réside dans le fait qu'il existe une multitude de véhicules automobiles pouvant comprendre des batteries de types différents, fixées de manière différentes sur le véhicule automobile. Or il n'est pas envisageable économiquement de multiplier les systèmes de montage et de démontage de ces différents types de batteries ni de mettre en place une solution manuelle en raison de son coût et du poids des batteries. La solution décrite dans le document US2010/145717 ne répond pas de manière satisfaisante à cette problématique de flexibilité de la solution d'échange de batterie en raison notamment d'un manque de robustesse.

Toutes les solutions connues à l'heure actuelle ne parviennent pas à répondre à la problématique de flexibilité tout en présentant une conception simple, un encombrement limité et un coût raisonnable.

### Objet de l'invention

Pour rendre possible un développement aisé des solutions d'échange de batteries, il est nécessaire de rendre fiable et simple, robuste, flexible et universel, le fonctionnement de ces solutions, tout en limitant leur coût et leur encombrement.

Le but de la présente invention est de fournir une solution d'échange d'une batterie d'alimentation d'un moteur électrique de traction d'un véhicule de type tout électrique ou de type hybride qui réponde à ces problèmes.

Il est donc proposé un dispositif de montage et de démontage d'une batterie en dessous d'un véhicule électrique ou hybride, le dessous du véhicule étant disposé dans un premier plan sensiblement horizontal, le dispositif comportant une table élévatrice déplaçant verticalement un organe d'interaction apte à interagir avec le dessous du véhicule. L'organe d'interaction est amené par la table élévatrice au contact mécanique avec le dessous du véhicule, le dessus de l'organe étant alors disposé dans un second plan sensiblement horizontal dans un état ne permettant pas audit organe d'interagir avec le dessous du véhicule à cause d'une inclinaison relative entre le premier et le second plan. La table élévatrice est levée au moyen d'au moins deux câbles dont l'élasticité permet de compenser l'inclinaison relative des deux plans afin d'autoriser l'organe à interagir avec le dessous du véhicule.

L'élasticité des câbles peut permettre de compenser l'inclinaison relative des deux plans dans la limite de la déformabilité desdits câbles.

Les câbles peuvent être disposés symétriquement de part et d'autre de la table élévatrice, être entraînés par un même moteur et/ou par l'intermédiaire de poulies.

Le dispositif peut comporter en outre un élément de correction d'assiette permettant de mettre le véhicule dans le premier plan sensiblement horizontal.

L'organe d'interaction comprenant un élément d'actionnement d'un mécanisme de verrouillage et/ou de déverrouillage de la batterie sous le véhicule, le mécanisme comportant une pluralité de verrous, l'élasticité des câbles peut permettre de compenser l'inclinaison relative entre les plans afin d'autoriser l'actionnement des verrous.

Un des principaux avantages de l'invention est d'être robuste, flexible et universelle dès lors que l'organe d'interaction peut être facilement adapté au type de véhicule, tout en présentant une conception simple, un encombrement limité et un coût raisonnable.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 et 2 sont des vues en perspective d'un premier mode de réalisation d'un dispositif de montage et de démontage selon le deuxième aspect de l'invention,
- la figure 3 est une vue latérale d'un deuxième mode de réalisation d'un dispositif de montage et de démontage selon le deuxième aspect de l'invention,
- la figure 4 est une vue schématique de dessus d'un exemple d'une station d'échange selon le troisième aspect de l'invention,
- la figure 5 est une vue latérale du premier mode de réalisation, en situation de coopération et de contact mécanique de l'organe d'interaction.

### Description de modes préférentiels de l'invention

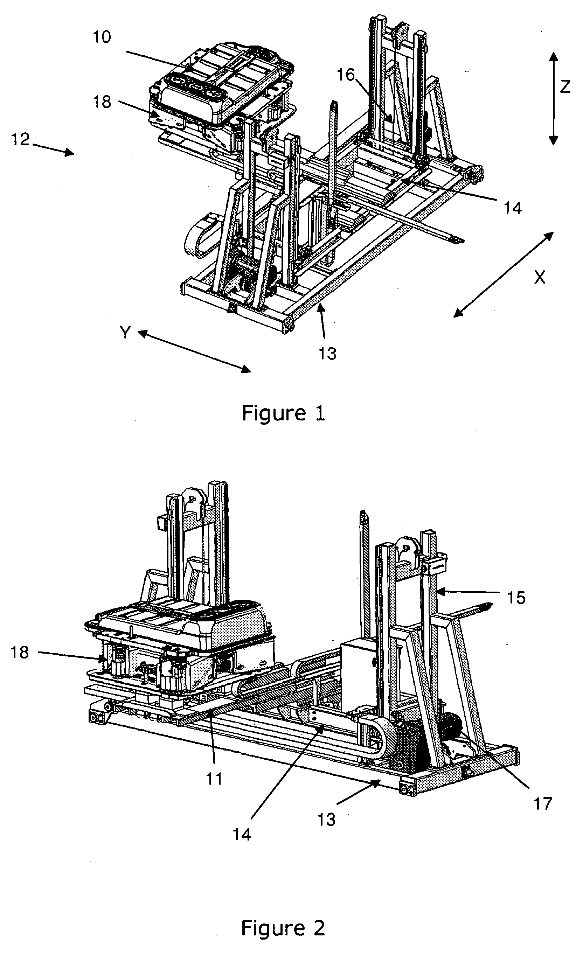

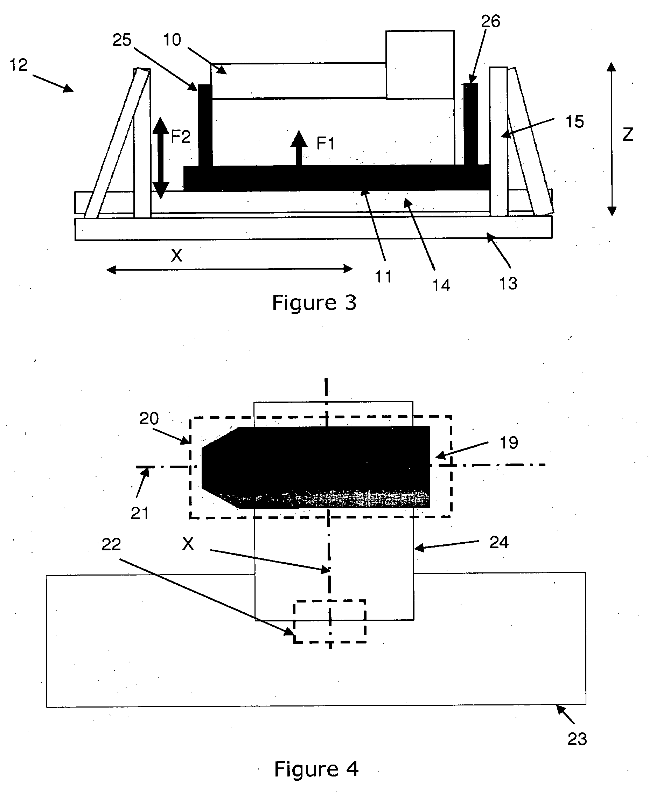

Les figures 1 et 2 représentent un premier mode de réalisation d'un dispositif de montage et de démontage de batterie 10 d'alimentation sur un véhicule automobile à traction toute électrique ou hybride. La figure 3 illustre quant à elle un deuxième mode de réalisation, simplifié par rapport au premier comme il le sera compris plus loin. Les éléments en commun dans les deux modes de réalisation sont affectés sur les figures de références identiques. Chacun de ces dispositifs est conçu pour assurer un montage et un démontage d'une batterie 10 dans une cellule de logement par le dessous du véhicule.

Sur les figures 1 et 2, le dispositif de montage/démontage de batteries 10 comporte à cet effet une table élévatrice 11 destinée indirectement à verrouiller et déverrouiller une batterie 10 par rapport à la cellule de logement du véhicule et à déplacer au moins verticalement la batterie lorsqu'elle est à l'état déverrouillée, selon une direction verticale repérée Z. Pour pouvoir accomplir les opérations d'installation ou de retrait de batterie dans la cellule de logement et les opérations de verrouillage et de déverrouillage de batterie une fois installée, il est nécessaire que la table élévatrice 11 soit correctement positionnée par rapport au véhicule, notamment vis-à-vis de sa cellule de logement, et que le véhicule présente une assiette adaptée relativement à la table élévatrice.

La table élévatrice 11 porte ainsi un organe d'interaction apte à interagir avec le dessous du véhicule. L'organe d'interaction peut comprendre un élément de positionnement relatif de la table élévatrice 11 par rapport au véhicule et/ou de correction d'assiette du véhicule. Cet élément de positionnement peut être destiné à compenser des décalages horizontaux entre la table 11 et le véhicule et éventuellement à générer un soulèvement du véhicule, par élévation de la table 11, à une hauteur prédéterminée pour s'affranchir des différences de hauteur entre les différents types de véhicules existants. L'élément de correction d'assiette peut consister en un portoir à plusieurs points de contact avec le véhicule, la mise en contact de l'ensemble des points du portoir avec le véhicule pouvant être réalisée par un soulèvement du véhicule, simultané ou postérieur à celui correspondant au positionnement relatif véhicule/table. Ces éléments de positionnement et/ou de correction d'assiette peuvent être associés à la table par un montage amovible, permettant un démontage de ces derniers par rapport à la table élévatrice selon les cas.

En complément ou en substitution, l'organe d'interaction peut comprendre un élément de support de la batterie 10 pendant son stockage et/ou sa recharge électrique, assurant ainsi un support de la batterie lorsqu'elle est débarquée de la table 11 du dispositif de montage et de démontage. Un tel élément de support, de type palette ou pouvant par exemple prendre le nom de « lugette », peut notamment être destiné à faciliter la manutention et le stockage de la batterie en dehors du dispositif de montage/démontage.

Ainsi la mobilité de la table élévatrice 11 dans la direction verticale Z, en plus de permettre de remplir sa fonction d'élévation des batteries, permet en outre à l'organe d'interaction précédemment décrit d'interagir avec le dessous du véhicule, par exemple éventuellement sous la forme d'une approche et/ou d'un placage de l'organe d'interaction contre le véhicule, afin que les éléments qui le constituent (élément de positionnement et/ou de correction d'assiette et/ou élément de support de batterie pendant son stockage et/ou sa recharge électrique) puissent remplir leurs fonctions.

Le dispositif de montage et de démontage comprend un chariot 12 sur lequel est montée la table élévatrice 11 et configuré de sorte à déplacer l'ensemble constitué par la table élévatrice 11 et l'organe d'interaction dans au moins une direction de déplacement sensiblement horizontale. Pour déplacer cet ensemble, il peut être prévu une possibilité de translation horizontale du chariot 12 dans une première direction de déplacement X et éventuellement une possibilité de translation horizontale de la table élévatrice 11 par rapport au chariot 12 dans une deuxième direction de déplacement Y. Autrement dit, le chariot 12 est dans cette dernière éventualité configuré de sorte à déplacer la table élévatrice 11 relativement à lui-même dans la deuxième direction Y. En variante, il est toutefois possible que le chariot 12 soit conçu de sorte à se déplacer dans les deux directions X et Y, qui sont par exemple perpendiculaires entre elles. Les premier et deuxième modes de réalisation prévoient ainsi un déplacement du chariot 12 dans la première direction X, tandis que seul le premier mode de réalisation prévoit un déplacement horizontal de la table 11 dans la deuxième direction Y par exemple à l'aide d'un déplacement de la table relativement au chariot 12 sur lequel elle est montée.

En pouvant ainsi se déplacer horizontalement par action du chariot 12, la table élévatrice 11 peut donc avantageusement changer de position depuis la zone de montage/démontage des batteries sur véhicules, afin par exemple de pouvoir participer à d'autres opérations nécessaires à la gestion de l'échange de batterie, et ce à différentes hauteurs de travail, telles que des opérations de nettoyage de batteries et/ou des opérations d'installation et de retrait de batteries dans des cellules de stockage et/ou de recharge électrique.

En outre, l'organe d'interaction porté par la table élévatrice 11 peut éventuellement comprendre un élément d'actionnement 18 d'un mécanisme de verrouillage d'une batterie sur le véhicule. Un tel mécanisme de verrouillage est ainsi apte à varier entre un état verrouillé immobilisant spatialement à l'intérieur de la cellule de logement du véhicule la batterie avec laquelle il coopère dans une position montée et un état déverrouillé libérant spatialement la batterie de sa position montée. L'élément d'actionnement peut ainsi être conçu de sorte qu'une manoeuvre idoine de ce dernier puisse commander le passage du mécanisme de verrouillage d'un état à l'autre, cette manoeuvre se faisant par le dessous du véhicule par exemple.

À titre d'exemple présentant l'avantage de sa rapidité et de sa facilité de mise en oeuvre, le mécanisme de verrouillage qui équipe un véhicule peut être configuré de sorte que sa manoeuvre nécessite une mise en contrainte du mécanisme pour obtenir son débrayage puis une rotation (par exemple de 90 degrés) d'au moins un verrou (par exemple au nombre de quatre) pour obtenir le verrouillage et/ou le déverrouillage du mécanisme. Il est également possible que l'élément d'actionnement 18 soit flexible en ce sens qu'il puisse être réglé ou changé pour s'adapter aux différents types de mécanismes de verrouillage que peuvent comprendre les différents types de véhicules. Pour cela, cet élément 18 peut comprendre de manière avantageuse une interface standard et un certain nombre de composants standards et modulaires afin d'obtenir un élément 18 adapté pour une intervention sur tous types de batterie et tous véhicules automobiles. Un tel élément d'actionnement 18 est aussi appelé par sa dénomination anglo-saxonne « toolbox », comme par exemple celui décrit dans la demande publiée sous le numéro FR2952334.

Le déplacement horizontal de la table 11 par action du chariot 12 permet donc avantageusement de changer éventuellement de position l'élément d'actionnement 18 depuis la zone de montage/démontage des batteries sur véhicules, afin par exemple de pouvoir utiliser cet élément 18 en substitution de l'élément de support précédemment décrit, voire même venir utiliser cet élément 18 pour installer et/ou retirer une batterie dans une cellule de stockage d'une structure de stockage et/ou de recharge dans le cas où cette cellule est elle-même équipée avantageusement d'un mécanisme de verrouillage à l'image de la cellule de logement du véhicule.

Comme l'illustrent les figures 1 et 2, une conception possible mais en aucun cas limitative consiste à prévoir que le chariot 12 puisse comprendre un élément roulant 13 destiné à assurer une translation globale du chariot 12 (et donc de l'ensemble table élévatrice 11/organe d'interaction) dans au moins la direction de déplacement X, voire en plus dans la direction de déplacement Y, ce qui n'est toutefois pas le cas sur les figures 1 et 2. Le déplacement de l'élément roulant 13 peut être obtenu à l'aide de moyens de propulsion embarqués ou à l'aide de moyens de traction externes (par exemple à l'aide de câbles, de système de crémaillère).

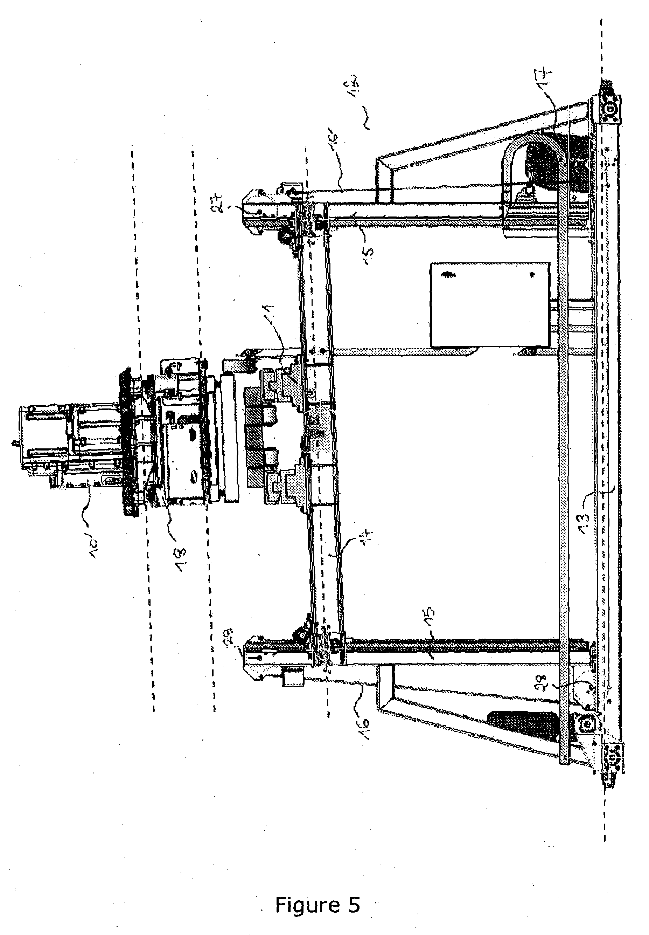

Le chariot 12 peut en outre comprendre une plate-forme élévatrice 14 mobile verticalement en Z, liée à l'élément roulant 13 par tout moyen de levage relatif entre ces deux parties. À titre d'exemple, le mouvement vertical en Z de la plate-forme 14 relativement à l'élément roulant 13 peut être obtenu par une paire de fourches élévatrices 15 décalées dans la direction X, chacune de ces fourches étant actionnée en déplacement vertical par au moins un câble 16 dont le défilement est commandé par exemple par un moteur 17 correspondant embarqué sur l'élément roulant 13. Avantageusement, comme illustré par le mode de réalisation de la figure 5 qui permet de monter ou de démonter une batterie 10' dont les dimensions sont sensiblement différentes de celles de la batterie 10, la relative élasticité de câbles 16 et 16' de levage permet de conformer, c'est-à-dire de rendre parallèles, les deux plans que sont le plan sensiblement horizontal du véhicule (ce plan ayant été établi après correction d'assiette du véhicule comme décrit précédemment) et le plan sensiblement horizontal de la batterie (ce plan ayant été établi après positionnement de la batterie sur la table élévatrice 11 comme décrit précédemment). Les câbles 16 et 16', distants l'un de l'autre en étant par exemple disposés symétriquement de part et d'autre de la table élévatrice 11, par exemple suivant X, sont tous deux entraînés par le même moteur 17, par l'intermédiaire d'une poulie d'axe 27 pour le câble 16' et par l'intermédiaire de deux poulies d'axes 28 et 29 pour le câble 16. L'absence de parallélisme entre les deux plans pourtant sensiblement horizontaux se caractérise par un léger écart angulaire ΔX autour de l'axe de rotation X et par un léger écart angulaire ΔY autour de l'axe de rotation Y. L'élasticité des câbles 16 et 16' de levage permet de continuer de lever légèrement un côté de la plate-forme 14, par exemple le côté levé par le câble 16' sur l'exemple de la figure 5, alors que l'autre côté de ladite plate-forme 14 est déjà bloqué par le dessous du véhicule, par exemple le côté levé par le câble 16 sur l'exemple de la figure 5. Dans le présent exemple de réalisation, ce sont les parties de verrous disposées du côté de la batterie 10' qui viennent en contact mécanique avec leur partie complémentaire disposée du côté du véhicule. Il faut comprendre que l'élasticité des câbles 16 et 16' de levage permet de continuer à lever légèrement la plate-forme 14 d'un côté ou de l'autre dans la limite de la déformabilité de ces câbles et que tout câble, même en acier, est légèrement élastique. Ainsi, la plate-forme 14 s'incline lorsque le côté levé par le câble 16' continue à monter alors que l'autre côté est bloqué : la plate-forme pivote autour des axes X et Y de manière à compenser les écarts ΔX et ΔY, la figure 5 illustrant la compensation de l'écart ΔY. Il faut également noter que, même si c'est essentiellement le plan sensiblement horizontal de la batterie qui s'incline, le plan sensiblement horizontal du véhicule s'incline également mais dans une bien moindre mesure.

Sur la plate-forme de levage 14 est montée la table élévatrice 11 par un moyen de liaison qui peut inclure éventuellement un moyen de déplacement vertical relatif entre la table élévatrice 11 et la plate-forme de levage 14 et/ou un moyen de déplacement horizontal relatif entre la table élévatrice 11 et la plate-forme 14 selon la direction Y, ce qui n'est le cas que dans le premier mode de réalisation. Cette dernière éventualité est notamment prévue avantageusement dans le cas où l'élément roulant 13 n'est pas monté déplaçable dans la direction Y. D'autre part, le moyen de déplacement vertical relatif table 11/plate-forme 14 a pour avantage de conférer un déplacement global vertical de la table 11 par rapport à l'élément roulant 13 qui est télescopique, i.e. avec une première composante verticale (voir flèche F1 sur la figure 3) éventuelle consistant en un déplacement relatif table 11/plate-forme 14 et une deuxième composante verticale (voir flèche F2 sur la figure 3) éventuelle consistant en un déplacement relatif plate-forme 14/élément roulant 13. Ceci est particulièrement avantageux dans le cas où le chariot 12 est aménagé dans une fosse ménagée dans le sol, afin de réduire autant que possible la hauteur de cette fosse.

Le déplacement horizontal de la table 11 en Y est quant à lui utile par exemple dans le cas où la table 11 participe aux opérations d'installation et de retrait des batteries dans la structure de stockage et/ou de recharge électrique, permettant d'implanter cette structure de manière décalée par rapport à la trajectoire du chariot 12 dans la direction X. La possibilité de déplacement horizontal en Y de la table 11 par rapport à la plate-forme 14 peut être remplacée par ou combinée à une possibilité de déplacement relatif en Y de la plate-forme 14 par rapport à l'élément roulant 13.

Comme indiqué précédemment, le mode de réalisation de la figure 3 est une simplification de celui des figures 1 et 2 en ce sens que par rapport à ce dernier, le chariot 12 de la figure 3 n'est pas prévu pour assurer un déplacement horizontal de la table 11 dans la direction Y, mais seulement dans la direction X. Ainsi, il n'est prévu aucun déplacement en Y de l'élément roulant 13 et/ou de déplacement en Y de la plate-forme 14 relativement à l'élément roulant 13 et/ou de déplacement en Y de la table 11 par rapport à la plate-forme 14.

De manière non illustrée, chacun des dispositifs de montage/démontage des deux modes de réalisation peut comprendre au moins deux tables élévatrices 11 indépendantes, agencées de manière décalée dans la direction Y. En variante, il est possible de prévoir que le chariot 12 soit configuré de sorte opérer une rotation de la table élévatrice 11 unique autour d'un axe de pivotement vertical.

Un dispositif de montage et de démontage tel que mentionné ci-dessus peut donc servir à l'agencement d'une station d'échange de batterie de véhicule automobile électrique ou hybride. L'implantation d'un exemple d'une telle station est schématiquement représenté en vue de dessus sur la figure 4. Pour permettre l'accès puis l'évacuation des véhicules 19 à la zone de montage et de démontage 20 proprement dite, la station peut en outre comporter une voie 21 le long de laquelle les véhicules 19 sont destinés à circuler. Dans une variante particulière et non exclusive, comme illustré sur la figure 4, le dispositif de montage et de démontage peut être implanté de sorte à présenter une orientation telle que le chariot 12 se déplace dans une direction de déplacement X sensiblement perpendiculaire à la trajectoire de circulation des véhicules 19 le long de la voie 21. Toutefois, la direction de déplacement X du chariot 12 peut indifféremment être orientée parallèlement à la voie 19.

Cette station peut être configurée de sorte que le déplacement de l'ensemble (table 11 et organe d'interaction) se pratique depuis ou vers une zone de transfert 22 dans laquelle une batterie démontée est transférée du dispositif de montage et de démontage à un dispositif de manutention distinct du dispositif de montage/démontage ou inversement. Ce dispositif de manutention, pouvant revêtir toute conception adaptée à sa fonction, est apte à déplacer la batterie entre la zone de transfert 22 et une zone de stockage et/ou de charge de batteries 23. Dans ce cas, il est possible d'agencer le dispositif de montage et de démontage dans une fosse 24 ménagée dans le sol, la zone de transfert 22 étant alors prévue en bord de fosse 24 de sorte que le dispositif de manutention et la zone de stockage et/ou de charge 23 soient aménagés en dehors de la fosse 24, limitant ainsi encore l'encombrement général de la solution d'échange de batterie.

Il ressort à la lecture de ce qui précède qu'un procédé d'échange de batterie que le dispositif de montage et de démontage permet de réaliser est tel qu'il comprend une étape de déplacement de l'ensemble constitué par la table élévatrice et l'organe d'interaction avec le véhicule, dans au moins une direction de déplacement sensiblement horizontale. Dans le cas où la direction de déplacement X de l'ensemble est perpendiculaire à la voie 21, la direction X est sensiblement perpendiculaire à l'axe longitudinal du véhicule qui subit l'échange de batterie en étant stationné dans la zone de montage/démontage 20. Toutefois, suivant les besoins et les possibilités d'agencement des différents éléments constitutifs de la station, notamment en ce qui concerne le choix de l'emplacement de la zone de stockage et/ou de charge relativement à la zone de montage et de démontage, il reste possible que la direction de déplacement X de l'ensemble soit sensiblement parallèle à l'axe longitudinal du véhicule.

Dans ce qui précède et en référence à la figure 3, l'élément de positionnement et/ou de correction d'assiette peut inclure deux positionneurs 25 décalés latéralement de part et d'autre de la cellule de logement, perpendiculairement à l'axe de la voie 21, chacun des positionneurs 25 pouvant adopter par exemple la forme d'une tige dont l'extrémité supérieure libre est adaptée pour coopérer avec des éléments complémentaires portés par le véhicule afin de compenser dans une plage donnée les décalages horizontaux entre la table 11 et le véhicule 19 susceptibles d'apparaître en raison d'un positionnement imprécis du véhicule. En complément des éléments de correction d'assiette peuvent comporter par exemple deux appuis 26 avant et arrière décalés longitudinalement parallèlement à l'axe de la voie 21. Sur la figure 3, seul le positionneur 25 disposé, à gauche de la table 21 est visible, le positionneur disposé à sa droite étant caché par l'appui 26 avant. Chacun des appuis 26 peut également adopter une forme de tige dont l'extrémité libre supérieure est destinée à l'appui contre le dessous du véhicule. La fonction de support de véhicule par le positionneur 25 gauche vient se combiner au support du véhicule par les appuis 26 disposées à droite, de sorte à former un portoir à au moins trois pieds dont l'actionnement vertical, par déplacement en Z de la table 11, assure une correction d'assiette du véhicule. Ces éléments 25 et 26 peuvent être montés sur la table élévatrice de manière amovible selon les besoins.

Finalement, la solution décrite atteint bien l'objet recherché et présente les avantages suivants :
- une gestion aisée de la diversité des batteries dans les stations d'échange,
- une assurance de respecter l'intégrité de chaque batterie pendant tout le cycle d'échange,
- une mise en oeuvre simple et peu onéreuse,
- une standardisation possible des interfaces de manutention,
- une possibilité de charger différents éléments d'actionnement 18 en fonction des types de batterie et/ou des types de mécanisme de verrouillage, conférant une grande flexibilité.

## Revendications

1. Dispositif de montage et de démontage d'une batterie (10') en dessous d'un véhicule (19) électrique ou hybride, le dessous du véhicule étant disposé dans un premier plan sensiblement horizontal, le dispositif comportant une table élévatrice (11) déplaçant verticalement un organe d'interaction apte à interagir avec le dessous du véhicule, ledit organe d'interaction étant amené par la table élévatrice au contact mécanique avec le dessous du véhicule, le dispositif étant **caractérisé en ce que** le dessus de l'organe étant alors disposé dans un second plan sensiblement horizontal dans un état ne permettant pas audit organe d'interagir avec le dessous du véhicule à cause d'une inclinaison relative (ΔX, ΔY) entre le premier et le second plan, et la table élévatrice est levée au moyen d'au moins deux câbles (16, 16') dont l'élasticité permet de compenser l'inclinaison relative des deux plans afin d'autoriser l'organe à interagir avec le dessous du véhicule.

2. Dispositif selon la revendication 1 **caractérisé en ce que** l'élasticité des câbles (16, 16') permet de compenser l'inclinaison relative des deux plans dans la limite de la déformabilité desdits câbles.

3. Dispositif selon la revendication 1 **caractérisé en ce que** les câbles (16, 16') sont disposés symétriquement de part et d'autre de la table élévatrice (11).

4. Dispositif selon la revendication 1 **caractérisé en ce que** les câbles (16, 16') sont entraînés par un même moteur (17).

5. Dispositif selon la revendication 1 **caractérisé en ce que** les câbles (16, 16') sont entrainés par l'intermédiaire de poulies.

6. Dispositif selon la revendication 1 **caractérisé en ce que** le dispositif comporte en outre un élément de correction d'assiette (25, 26) permettant de mettre le véhicule dans le premier plan sensiblement horizontal.

7. Dispositif selon la revendication 1 **caractérisé en ce que**, l'organe d'interaction comprenant un élément d'actionnement (18) d'un mécanisme de verrouillage et/ou de déverrouillage de la batterie sous le véhicule, le mécanisme comportant une pluralité de verrous, l'élasticité des câbles (16, 16') permet de compenser l'inclinaison relative des deux plans afin d'autoriser l'actionnement des verrous.

## Patentansprüche

1. Vorrichtung zum Ein- und Ausbau einer Batterie (10') unter einem Elektro- oder Hybridfahrzeug (19), wobei die Unterseite des Fahrzeugs sich in einer ersten im Wesentlichen waagrechten Ebene befindet, wobei die Vorrichtung einen Hubtisch (11) aufweist, der ein Interaktionsorgan senkrecht verschiebt, das mit der Unterseite des Fahrzeugs interagieren kann, wobei das Interaktionsorgan vom Hubtisch mit der Unterseite des Fahrzeugs in mechanischen Kontakt gebracht wird, wobei die Vorrichtung **dadurch gekennzeichnet ist, dass** die Oberseite des Organs dann in einer zweiten im Wesentlichen waagrechten Ebene in einem Zustand angeordnet ist, der es dem Organ aufgrund einer relativen Neigung (ΔX, ΔY) zwischen der ersten und der zweiten Ebene nicht erlaubt, mit der Unterseite des Fahrzeugs zu interagieren, und der Hubtisch mittels mindestens zwei Kabeln (16, 16') angehoben wird, deren Elastizität es erlaubt, die relative Neigung der zwei Ebenen zu kompensieren, um es dem Organ zu erlauben, mit der Unterseite des Fahrzeugs zu interagieren.

2. Vorrichtung nach Anspruch 1, **dadurch gekennzeichnet, dass** die Elastizität der Kabel (16, 16') es ermöglicht, die relative Neigung der zwei Ebenen in den Grenzen der Verformbarkeit der Kabel zu kompensieren.

3. Vorrichtung nach Anspruch 1, **dadurch gekennzeichnet, dass** die Kabel (16, 16') symmetrisch zu beiden Seiten des Hubtischs (11) angeordnet sind.

4. Vorrichtung nach Anspruch 1, **dadurch gekennzeichnet, dass** die Kabel (16, 16') von dem gleichen Motor (17) angetrieben werden.

5. Vorrichtung nach Anspruch 1, **dadurch gekennzeichnet, dass** die Kabel (16, 16') mittels Riemenscheiben angetrieben werden.

6. Vorrichtung nach Anspruch 1, **dadurch gekennzeichnet, dass** die Vorrichtung außerdem ein Trimmlagenkorrekturelement (25, 26) aufweist, das es ermöglicht, das Fahrzeug in die erste im Wesentlichen waagrechte Ebene zu bringen.

7. Vorrichtung nach Anspruch 1, **dadurch gekennzeichnet, dass**, da das Interaktionsorgan ein Betätigungselement (18) eines Verriegelungs- und/oder Entriegelungsmechanismus der Batterie unter dem Fahrzeug aufweist, wobei der Mechanismus eine Vielzahl von Riegeln aufweist, die Elastizität der Kabel (16, 16') es ermöglicht, die relative Neigung der zwei Ebenen zu kompensieren, um die Betätigung der Riegel zu erlauben.

## Claims

1. Device for installing and uninstalling a battery (10') on the underside of an electric or hybrid vehicle (19), the underside of the vehicle lying in a first substantially horizontal plane, the device comprising a lift table (11) which vertically moves an engaging member able to interact with the underside of the vehicle, said engaging member being brought by the lift table into mechanical contact with the underside of the vehicle, the device being **characterized in that** the top of the member then lies in a second substantially horizontal plane in a state which does not allow said member to interact with the underside of the vehicle because of a relative inclination (ΔX, ΔY) between the first and second planes, and the lift table is raised by means of at least two cables (16, 16'), the elasticity of which allows compensation for the relative inclination of the two planes in order to enable the member to interact with the underside of the vehicle.

2. Device according to Claim 1, **characterized in that** the elasticity of the cables (16, 16') allows compensation for the relative inclination of the two planes within the limit of deformability of said cables.

3. Device according to Claim 1, **characterized in that** the cables (16, 16') are arranged symmetrically on either side of the lift table (11).

4. Device according to Claim 1, **characterized in that** the cables (16, 16') are driven by the same motor (17).

5. Device according to Claim 1, **characterized in that** the cables (16, 16') are driven via pulleys.

6. Device according to Claim 1, **characterized in that** the device also comprises a position correction element (25, 26) allowing the vehicle to be placed in the first substantially horizontal plane.

7. Device according to Claim 1, **characterized in that**, as the engaging member comprises an actuator element (18) for a mechanism for locking and/or unlocking the battery on the underside of the vehicle, wherein the mechanism comprises a plurality of latches, and the elasticity of the cables (16, 16') allows compensation for the relative inclination of the two planes in order to enable the actuation of the latches.
